(19) Europäisches Patentamt
European Patent Office
Office européen des brevets

(11) Publication number: **0 520 113 A2**

# (12) EUROPEAN PATENT APPLICATION

(21) Application number: **91403003.6**

(22) Date of filing: **07.11.91**

(51) Int. Cl.[5]: **C08G 69/34**, C08G 69/26, C08G 69/48, C09D 11/10, C09D 17/00

(30) Priority: **28.06.91 US 723261**

(43) Date of publication of application: **30.12.92 Bulletin 92/53**

(84) Designated Contracting States: **DE ES FR GB IT NL SE**

(71) Applicant: **WESTVACO CORPORATION**
**299 Park Avenue**
**New York New York 10171(US)**

(72) Inventor: **Hutter, G. Frederick**
**968 Orange Grove Road**
**Charleston, South Carolina 29407(US)**
Inventor: **Leblanc, Paul J.**
**550 Remington Forest Drive**
**Jacksonville, Florida 32259(US)**

(74) Representative: **Gillard, Marie-Louise et al**
**Cabinet Beau de Loménie 55, Rue d'Amsterdam**
**F-75008 Paris(FR)**

## (54) Water-soluble rosin polyamide resins.

(57) Improved water soluble resins having qualities of adhesion, wettability and improved stability for use in packaging ink compositions are prepared as the reaction products of modified rosin and a compound containing two secondary amine groups, and further modifying said reaction products with a polyol, such as diethylene glycol.

EP 0 520 113 A2

## Background of the Invention

### (1) Field of the Invention

This invention relates to a novel water-soluble resin. In particular, this invention relates to a water-soluble resin for packaging ink, derived from the reaction product of a modified rosin and a bis (secondary amine) such as piperazine.

### (2) Description of Prior Art

Resin used as a vehicle for water based packaging ink must exhibit properties such as solubility in water, wet adhesion to polypropylene film, hydrolytic stability, high melting point, and good pigment wetting.

Alcohol soluble polyamide resins have been used extensively in inks for packaging and are commercially available. These polyamides are made from dimerized fatty acids and various polyamines such as ethylene diamine or hexamethylene diamine.

The use of such polyamide resins in ink compositions is described in Floyd, D.E., Polyamide Resins, Reinhold Publishing Co., New York, 1958 and in the Encyclopedia of Polymer Science and Technology, Interscience Publishers, John Wiley Sons, Volume 10, New York, 1969. A typical commercial product is GAX-340 manufactured by Henkel.

For water based ink, a water soluble resin such as acrylic resin or a conventional soluble maleic resin may be used. Acrylic resins have good film properties, but lack adhesion to polyolefin films.

Conventional soluble maleic resins, which contain half- esters, are subject to a certain degree of hydrolytic instability under alkaline conditions. They also lack film toughness.

Water-based ink compositions are disclosed in U.S. Patent No. 4,963,188 to be prepared by free radical polymerization of rosin and maleic anhydride. Modification of the polymer with an alcohol or an amine prior to utilization in preparing the ink composition is disclosed.

It is an object of this invention to provide water soluble resins having qualities of adhesion and wettability for use in packaging ink compositions primarily for use in water/isopropanol-based inks for printing on film. It is a further object of this invention to provide water soluble resins having qualities of adhesion and wettability, as well as improved shelf stability when using these resins in all-water systems (i.e., no alcohol).

## Summary of the Invention

The first object is met by a novel resin derived from the reaction products of modified rosin and a compound containing two secondary amine groups, and the second object is met by further modifying said reaction products with a polyol, such as diethylene glycol.

## Description of the Preferred Embodiment(s)

Rosin is mainly a mixture of $C_{20}$, fused-ring, monocarboxylic acids, typified by levopimaric and abietic acids, both of which are susceptible to numerous chemical transformations. The rosins to which this invention relates include gum rosin, wood rosin, and tall oil rosin.

It is generally known in the art that alpha,beta-unsaturated acids and their anhydrides, such as maleic acid, maleic anhydride, itaconic acid, itaconic anhydride, and fumaric acid may be reacted with abietic type rosin acids to yield $C_{24}$ or $C_{25}$ polycyclic tricarboxylic acids and anhydrides. Examples include the reaction product of levopimaric acid reacted with fumaric acid, i.e., fumaropimaric acid (I) and the product of levopimaric acid reacted with maleic anhydride, i.e., maleopimaric acid anhydride (II), as described in Kirk-Othmer, Encyclopedia of Chemical Technology, 3rd Edition, Vol. 20, Wiley-Inter-Science Publications, John Wiley & Sons, New York, 1978:

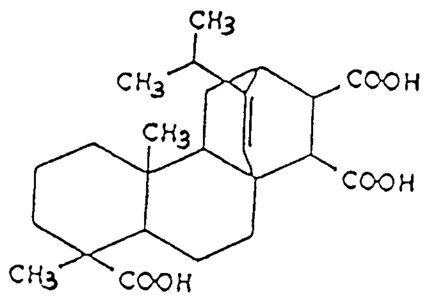

I

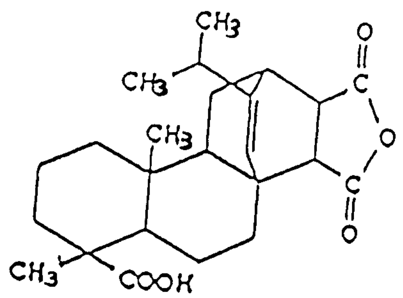

II

The water soluble resin of the present invention is produced by reacting such a maleated or fumarated rosin acid with a compound containing two secondary amine groups, and optionally by further modifying said reaction products with a polyol.

Generally, the polyamine may be any polyamine of the general form:

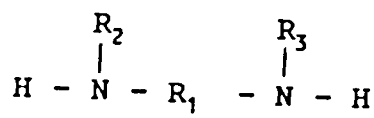

where $R_1$ = $C_2$-$C_{12}$ alkylene and $R_2$ and $R_3$ are $C_1$-$C_{18}$ alkyl or where $R_1$ = $C_2$-$C_4$ alkylene, $R_2$ + $R_3$ = $C_2$-$C_4$ alkylene and $R_1$, $R_2$, and $R_3$, together with the two nitrogens to which they arebonded, form a nitrogen-containing 6-10 member heterocyclic ring system. Preferably, the compound containing two secondary amine groups may be a linear polyamine, such as N,N'-dimethylethylene diamine, or a cyclical polyamine, such as piperazine.

The nitrogens of the compound containing 2 secondary amine groups react with the secondary carboxyls of the maleated or fumarated resin to form a linear oligomer with tertiary amide groups:

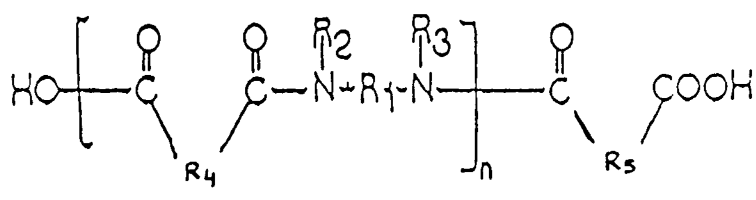

wherein $R_1$ and $R_2$ are as herein above defined and where at least one $R_4$ or $R_5$ is of the general form :

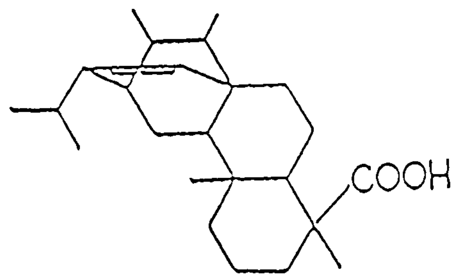

and any remaining $R_4$ or $R_5$ are independently $C_6$-$C_{12}$ alkylene, $C_6$-$C_{12}$ cycloalkylene or phenylene and wherein n = a positive integer from 1 to 10. Advantageously the linear oligomer has the general formula :

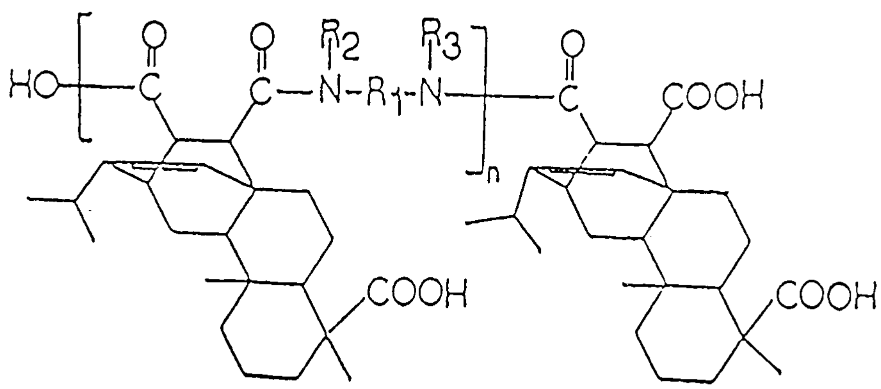

III

where n = a positive integer from 1 to 10 and preferably n = 2 or 3.

Use of secondary amines, rather than primary amines which would react with modified rosin in a similar way, is an essential aspect of this invention because of the lower viscosity thereby obtained. A primary amine reacted with a modified rosin forms either an imide, which has greater molecular rigidity, or a secondary amide, which is subject to interchain hydrogen bonding.

The reaction should be carried out at a relatively low temperature (below about 235° C., preferably about 200° C.) so that reaction of the secondary carboxyls of the rosins is favored over the tertiary ones and to avoid chain branching. Since rosin typically cannot be fully maleated or fumarated, resin made by the above process will contain a certain amount of unreacted rosin, which acts as a plasticizer and reduces the softening point of the resin. The softening point can be increased either by using a rosin that has a relatively higher content of abietic-type rosin acids, such as gum rosin, and, thus, can be maleated or fumarated to a greater extent, or by using maleated or fumarated rosin that has been vacuum stripped to remove part of the unreacted rosin.

A higher softening point may also be obtained by replacing part of the maleated or fumarated rosin with a dicarboxylic acid such as adipic or isophthalic acid. The dicarboxylic acid may be any dicarboxylic acid of the general form:

$HOOC - R_4 - COOH$

where $R_4$ = $C_6$ - $C_{12}$ alkylene, cycloalkylene or phenylene.

A wide range of polyols may be employed in the subsequent modification of the aminated modified rosin to provide the desired viscosity water soluble resin which possesses improved stability. All polyols tested have been shown to be effective. The polyols applicable to this invention include those with from 2 to 8 hydroxyl groups and exhibiting a molecular weight of from 62 to 600. Preferred polyols include diethylene glycol, triethylene glycol, tetraethylene glycol, glycerol, dipropylene glycol, 1,4-butanediol, pentaerythritol, sorbitol, and poly(ethylene glycol).

The resins of this invention may be used to prepare conventional water varnishes, pigment bases, and water-based inks. Advantageously, the water varnishes comprise water, $NH_4OH$, isopropanol, a defoamer and a resin according to the present invention. The invention also concerns the pigment base comprising a

pigment and the above water varnish.

The invention also concerns an ink comprising an acrylic polymer, a wax and the above pigment. The defoamer, the pigment, the wax and the acrylic polymer used in the above products are any one compounds conventionally used in that field.

The following examples serve to illustrate the modified rosin-bis (secondary amine) resins of the present invention:

Example 1

An amount of eight hundred eighty-eight grams of 17.9% fumarated tall oil rosin was charged to a 2L flask fitted with a stainless steel stirrer and nitrogen sparge tube. The rosin was heated to 200° C., and 77.2 g of piperazine was added slowly. The charge was held for 1 hour at 200° C., at which time the acid number was 194. The resulting resin had a Ring and Ball softening point of 142° C. and a Gardner-Holt viscosity of R-S at 35% solids in aqueous ammonia at pH 8.5.

Example 2

A series of resins were prepared in the same manner as Example 1 with varying amounts of fumarated or maleated gum and tall oil rosin reacted with piperazine or N,N'-dimethylethylenediamine, and, in some instances, isophthalic acid, adipic acid, or succinic acid. The Ring and Ball softening point and viscosity (Gardner-Holt type) are reported in Table I below.

TABLE I

| Resin No. | Composition (Parts by wt.) | Acid No. | S.P., °C. (R&B) | Grind Solution Viscosity[a] Alc/$H_2O$ | $H_2O$ |
|---|---|---|---|---|---|
| 1 | 68.1 MTOR[c]<br>16.2 Piperazine<br>15.7 IPA[c] | 161 | 155 | P | X |
| 2 | 92.7 MGR[c]<br>7.3 Piperazine | 198 | 153 | C | F |
| 3 | 71.4 MTOR[c]<br>17.0 Piperazine<br>11.6 ScA[c] | 133 | 157 | Insol. | Insol. |
| 4[b] | 93.0 FGR[c]<br>7.0 Piperazine | 238-259 | 150-157 | <A | <A |
| 5 | 83.3 MTOR[c]<br>9.9 Piperazine<br>6.8 ScA[c] | 170 | 136 | Insol. | Insol. |
| 6 | 92.8 FTOR[c]<br>7.2 Piperazine | 194 | 136 | F | J |
| 7[b] | 92.0 FTOR[c]<br>8.0 Piperazine | 188-195 | 142-143 | F½ to H | R½ to U½ |
| 8[b] | 68.6 FTOR[c]<br>6.0 Piperazine<br>15.4 IPA[c] | 188-181 | 152-160 | D to I | P to U½ |
| 9 | 69.9 FTOR[c]<br>16.3 Piperazine<br>13.8 AA[c] | 167 | 155 | U½ | Z1 |
| 10 | 89.1 HMTOR[c]<br>10.9 Piperazine | 183 | 163 | H | X |
| 11 | 91.8 MTOR[c]<br>8.2 Piperazine | 174 | 147 | R | Z2 |
| 12 | 91.8 FTOR[c]<br>8.2<br>N,N' -dimethyl-ethylene diamine | 176 | 126 | A | G |

a 35% solutions. (Alc/$H_2O$ is 10% isopropyl alcohol in water as volatile phase). Adjusted to pH 8.5 with ammonia.

b Multiple runs of the same composition; physical properties represent the range obtained.

c AA=adipic acid; FGR=25.6% fumarated gum rosin; FTOR=18.6% fumarated tall oil rosin; HMTOR=highly maleated tall oil rosin (vacuum stripped to remove unreacted rosin); IPA=isophthalic acid; MGR=21.7% maleated gum rosin; MTOR=15.7% maleated tall oil rosin; ScA=succinic acid.

In evaluating resins, high softening points are desirable because resins with high softening points increase the heat resistance of ink systems to which they are added. As shown in Table I, the highest softening point is obtained with vacuum stripped maleated rosin reacted with piperazine. Relatively high softening points are also obtained with tall oil rosin by replacing some of the fumurated or maleated rosin with a dibasic acid such as isophthalic, adipic or succinic acid (though the succinic products are insoluble).

Example 3

Water varnished were prepared from resin No. 7 and resin No. 8 of Example 2, above. Each resin was cut into a water varnish as follows:

| | |
|---|---|
| 35.0 | Resin |
| 3.0 | $NH_4OH$ |
| 9.0 | Isopropanol |
| 50.0 | $H_2O$ |
| 0.2 | Defoamer |
| 97.2 | |
| Various amounts of $NH_4OH$ or water were added to adjust pH to 8.4-8.7 and bring the total to 100%. | |

The defoamer used was a non-silicone (mineral oil-based) defoamer sold under the designation Foamburst 1005 by Ross Chemical, Inc. of Fountain Inn, South Carolina.

Properties of the varnishes were as shown in Table II:

Table II

| Description | Resin No. 7 | Resin No. 8 |
|---|---|---|
| | Fumarated Tall Oil Rosin | Fumarated Tall Oil Rosin |
| | Piperazine | Piperazine Isophthalic Acid |
| Acid Number | 195 | 181 |
| Melt Point | 142°C. | 155°C. |
| Color[1] | 15 | 15 |
| Viscosity[1] | E- | E-F |
| pH | 8.4 | 8.6 |
| appearance | clear | clear |

1 Gardner, 35NV water/alcohol/$NH_4OH$ Varnish

These varnishes were combined with a green shade phthalocyanine blue presscake sold by Sun Chemical of Cincinnati, Ohio, under the designation 449-5050 to make a pigment base.

| | | |
|---|---|---|
| Base Formula: | 50.0 | 449-5050 |
| | 49.5 | Varnish |
| | 0.5 | Foamburst 1005 |
| | 100.0 | |

Each of the resins produced acceptable pigment dispersion, however, the flow of the base was poor. Each dispersion was very thixotropic and had no flow.

Example 4

To evaluate working properties of the resins in inks, the bases described in Example 3 were letdown as follows:

| | | |
|---|---|---|
| Ink Formula: | 50.0 | Base |
| | 25.0 | Joncryl 620[1] |
| | 5.0 | Isopropanol |
| | 15.0 | Water |
| | 5.0 | Jonwax 263[2] |
| | 100.0 | |

[1] Joncryl 620 is a flexible acrylic polymer for film printing, surface and lamination, sold by S.C. Johnson of Racine, Wisconsin.
[2] Jonwax 26 is a wax sold by S.C. Johnson of Racine, Wisconsin.

Physicals on each of the inks were as shown in Table III:

Table III

| | Resin No. 7 | Resin No. 8 |
|---|---|---|
| Full strength visc. Zahn 3 | >45" | >45" |
| cut 2O% with | | |
| 80 $H_2O$:20 Isopropanol Zahn 3 | 18" | 18" |
| gloss[1] | 44.6 | 42.4 |
| Water resistance[2] % removal | 0% | 0% |

[1] # 7 meyer bar on Printcoat board

10 Minute spot test #7 meyer print on Printcoat board.

Each of the inks were printed with a flexo hand proofer on Mobil's LCM-W polypropylene film and treated polyethylene. Adhesion was considered good with all resins on both substrates. Compatibility was checked at a 1:1 level with both Joncryl 620 and Joncryl 61 (a flexible acrylic polymer for film printing, surface and lamination, sold by S.C. Johnson of Racine, Wisconsin). These varnish mixes were fully compatible.

When combined with the acrylic, the resins were fully compatible as evidenced by the high gloss levels. Adhesion properties of the acrylic to the polypropylene were increased by the addition of the polyamide resins. Tape adhesion and crinkle (i.e., resistance to flaking upon crinkling of a film substrate to which the ink is applied) were both very good.

The following examples serve to illustrate the invention water-soluble modified resins of improved stability:

Example 5

To a 2000 millimeter flask equipped with a mechanical stirrer and nitrogen sparge were charged 1000 grams tall oil rosin, 2.6 grams tributyl phosphite, and one drop Dow-Corning antifoam A. The charge was heated to 170 °C, and 186 grams fumaric acid was added. The charge was further heated to 200 °C and held at that temperature for one hour. Then 103 grams piperazine was added, and the charge was further heated to 235 °C, where it was held until the acid number was 170. Next, the batch was cooled to 205 °C, and 35 grams diethylene glycol was added. Heating was continued at 205 °C until the acid number was 154. The product was a clear resin with a ring-and-ball softening point of 137 °C. Solutions of this resin at 25% solids in aqueous ammonia at pH 9 to 10 were stable, remained clear, and showed no precipitation for a period of nine weeks. By contrast, a similar resin without the diethylene glycol modification gelled in aqueous ammoniacal solution in two days.

Example 6

A series of resins were prepared using the procedure of Example 5 but replacing the diethylene glycol with equimolar amounts of other polyols. These resins are listed in Table IV. All of the polyol-modified resins made had solution stabilities of greater than 30 days, except those made with pentaerythritol or sorbitol. Even these latter resins had stabilities of over three weeks, which might be acceptable in some applications. Of particular interest, due to its high softening point, is the resin containing glycerol. A higher softening point usually correlates with faster drying speed, which is highly desirable in an ink resin. On the other hand, the resins modified with PEG 400 or PPG 425 had very low softening points, which allow ink formulations with greater film flexibility.

TABLE IV

| POLYOL-MODIFIED PIPERAZINE RESINS | | | | | |
|---|---|---|---|---|---|
| Resin No. | Polyol | Acid No. | S.p. (°C) | Visc.[a] | Stability[b] |
| 6412-30 | none | 187 | 138 | -- | <1 |
| 6412-82 | DEG | 154 | 137 | G | >30 |
| 6488-17 | TEG | 155 | 137 | O-P | >30 |
| 6496-6 | Gly | 152 | 148 | W+ | >30 |
| 6496-10 | DPG | 152 | 142 | Y- | >30 |
| 6496-13 | 1,4-BD | 162 | 145 | U-V | >30 |
| 6496-20 | PEG200 | 159 | 132 | I | >30 |
| 6496-28 | PEG400 | 147 | 117 | R+[c] | >30 |
| 6496-29 | PPG425 | 146 | 120 | S- | >30 |
| 6496-50 | PE | 165 | 146 | U-V | 29 |
| 6496-53 | Sb | 150 | 146 | S+[c] | 27 |
| 6496-55 | TetEG | 165 | 136 | J | >30 |

[a]Gardner-Holt viscosity of a 25% solids solution in aqueous ammonia at a pH of 9.6. ± 0.1.

[b]Days standing at room temperature without gelling of a 25% solids solution in aqueous ammonia at a pH of 9.6 ± 0.1.

[c]Solution is slightly hazy.

Key: 1,4-BD = 1,4-butanediol; DEG = diethylene glycol; DPG = dipropylene glycol; PE = pentaerythritol; PEG200 = poly(ethylene glycol), 200 ave. molecular weight; PEG400 = poly(ethylene glycol), 400 ave. molecular weight; PPG425 = poly(propylene glycol), 425 ave. molecular weight; TEG = triethylene glycol; TetEG = tetraethylene glycol; Sb = sorbitol.

Example 7

Table V shows the change in pH and viscosity of 25% aqeuous ammonia solutions of the polyol-modified resins over 30 days. As can be seen, all of the solutions are quite stable with respect to viscosity. There is no obvious explanation for the small upward drift in pH for most of the solutions, but this behavior is not uncommon for aqueous solutions of maleic resins.

TABLE V

| PROPERTIES OF AGED PIPERAZINE RESIN SOLUTIONS | | | | | |
|---|---|---|---|---|---|
| Resin No. | Polyol | Viscosity | | pH | |
| | | Initial | 30 Days | Initial | 30 Days |
| 6488-17 | TEG | O-P | N-O | 9.56 | 9.83 |
| 6496-6 | Gly | W+ | W- | 9.52 | 9.81 |
| 6496-10 | DPG | Y- | Y+ | 9.58 | 9.88 |
| 6496-13 | 1,4-BD | U-V | U-V | 0.56 | 9.82 |
| 6496-20 | PEG200 | I | I-J | 9.58 | 9.60 |
| 6496-28 | PEG400 | R+ | S-T | 9.56 | 9.87 |
| 6496-29 | PPG425 | S- | S-T | 9.60 | 9.75 |
| 6496-55 | TetEG | J | J-K | 9.66 | 9.65 |
| Key: See Table IV. | | | | | |

It appears from the above data that a family of aqueous solution-stable ink vehicle resins with a range of softening points can be produced.

While the invention has been described and illustrated herein by references to various specific materials, procedures and examples, it is understood that the invention is not restricted to the particular materials, combinations of materials, and procedures selected for that purpose. Numerous variations of such details can be employed, as will be appreciated by those skilled in the art.

## Claims

1. A water soluble resin comprising the reaction product of (a) a rosin modified by reaction with a member of the group selected from fumaric acid, maleic acid, maleic anhydride, itaconic acid, and itaconic anhydride and (b) a compound containing two secondary amine groups.

2. The water soluble resin of claim 1 further comprising reacting said reaction product with a polyol.

3. The resin of claim 1 wherein the secondary amine containing compound is of the general form:

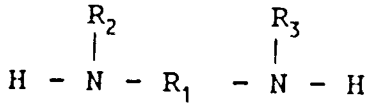

wherein $R_1$ = $C_2$-$C_{12}$ alkylene and $R_2$ and $R_3$ are $C_1$-$C_{18}$ alkyl; or where $R_1$ = $C_2$-$C_4$ alkylene, $R_2$ + $R_3$ = $C_2$-$C_4$ alkylene, and $R_1$, $R_2$, and $R_3$, together with the nitrogens to which they are bonded,form a nitrogen-containing 6-10 heterocyclic ring system.

4. The resin of claim 1 wherein the modified rosin is derived from the group consisting of tall oil rosin, gum rosin, and wood rosin.

5. The resin of claim 1 wherein the secondary amine containing compound is selected from the group

consisting of N,N' - dimethylethylene diamine and piperazine.

**6.** The water soluble resin of claim 1 additionally comprising (c) a dicarboxylic acid of the general form:

HOOC - $R_4$ - COOH

wherein $R_4$ = $C_6$ - $C_{12}$ alkylene, $C_6$ - $C_{12}$ cycloalkylene or phenylene.

**7.** The resin of claim 6 wherein the secondary amine containing compound is of the general form:

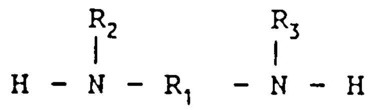

wherein $R_1$ = $C_2$ - $C_{12}$ alkylene and $R_2$ and $R_3$ are $C_1$ -$C_{18}$ alkyl; or wherein $R_1$ = $C_2$ - $C_4$ alkylene, $R_2$ + $R_3$ = $C_2$ - $C_4$ alkylene, and $R_1$, $R_2$, and $R_3$, together with the nitrogens to which they are bonded, form a nitrogen-containing 6-10 member heterocyclic ring system.

**8.** The resin of claim 6 wherein the modified rosin is derived from the group consisting of rosins consisting of tall oil rosin, gum rosin, and wood rosin.

**9.** The resin of claim 6 wherein the secondary amine containing compound is selected from the group consisting of N,N' - dimethylethylene diamine and piperazine.

**10.** The resin of claim 2 wherein the polyol is selected from the group consisting of diethylene glycol, triethylene glycol, glycerol, dipropylene glycol, 1,4-butanediol, poly(ethyleneglycol), pentaerythritol, sorbitol, and tetraethylene glycol.

**11.** A water soluble resin comprising at least one compound of the general from :

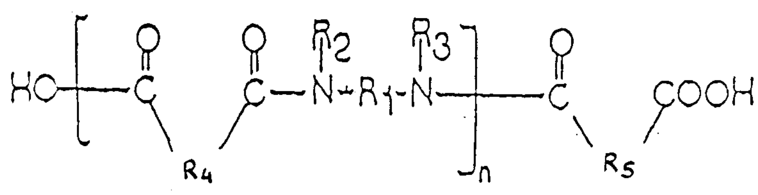

wherein $R_1$ = $C_2$ - $C_{12}$ alkylene and $R_2$ and $R_3$ are $C_1$ -$C_{18}$alkyl; or wherein $R_1$ = $C_2$ - $C_4$ alkylene, $R_2$ + $R_3$ = $C_2$ - $C_4$ alkylene and $R_1$, $R_2$,and $R_3$, together with the two nitrogens to which they are bonded, form a nitrogen-containing 6-10 member heterocyclic ring system, where at least one $R_4$ or $R_5$ is of the general form :

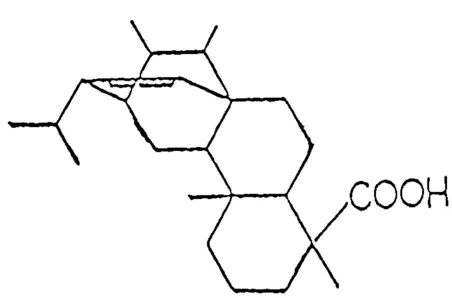

and any remaining $R_4$ or $R_5$ are independently $C_6$ - $C_{12}$ alkylene, $C_6$ - $C_{12}$ cycloalkylene or phenylene and wherein n = a positive integer from 1 to 10.

**12.** The resin of claim 11 wherein n = 2 or 3.

**13.** A water varnish comprising water, $NH_4OH$, isopropanol, a defoamer, and the resin of anyone of claims 1 to 12.

**14.** A pigment base comprising a pigment and the water varnish of claim 13.

**15.** An ink comprising an acrylic polymer, a wax, and the pigment base of claim 14.